(19) Europäisches Patentamt
European Patent Office
Office européen des brevets

(11) EP 4 776 194 A1

(12) # EUROPEAN PATENT APPLICATION
published in accordance with Art. 153(4) EPC

(43) Date of publication:
**15.07.2026 Bulletin 2026/29**

(21) Application number: **23951438.3**

(22) Date of filing: **05.09.2023**

(51) International Patent Classification (IPC):
***G06N 99/00*** *(2019.01)* ***G06Q 10/04*** *(2023.01)*

(52) Cooperative Patent Classification (CPC):
**G06N 99/00; G06Q 10/04**

(86) International application number:
**PCT/JP2023/032332**

(87) International publication number:
**WO 2025/052534 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
- **MARUO, Akito**
**Kawasaki-shi, Kanagawa 211-8588 (JP)**
- **HASOME, Ayano**
**Kawasaki-shi, Kanagawa 211-8588 (JP)**
- **IGARASHI, Hajime**
**Sapporo-shi, Hokkaido 060-0808 (JP)**

(74) Representative: **Haseltine Lake Kempner LLP**
**Cheapside House**
**138 Cheapside**
**London EC2V 6BJ (GB)**

(54) **COMPUTATION PROGRAM, COMPUTATION METHOD, AND INFORMATION PROCESSING DEVICE**

(57) A calculation program causes a computer to execute a process of, when converting an analysis target into an evaluation function and searching for a solution, generating a plurality of evaluation functions by reflecting variations in at least any element of the evaluation function, generating an objective function by combining the plurality of evaluation functions, and searching for a solution in the objective function.

FIG. 6

FORMULATION
PROBLEM
FORMULATION
GENERATE EVALUATION FUNCTION
ADDITION OF VARIATION
GENERATE EVALUATION FUNCTION f1
GENERATE EVALUATION FUNCTION f2
GENERATE EVALUATION FUNCTION f3
GENERATE EVALUATION FUNCTION fn
ROBUST FORMULATION
COMBINE FUNCTIONS f3 TO fn AND GENERATE OBJECTIVE FUNCTION F

EP 4 776 194 A1

FIG. 6

## Description

TECHNICAL FIELD

The present invention relates to a calculation program, a calculation method and an information processing device.

BACKGROUND ART

A variety of industries face optimization problems aimed at achieving favorable results. Research is being conducted into optimization algorithms that seek exact solutions to these optimization problems that achieve the highest computational results. For example, there is technology that formulates the analysis target in QUBO format and searches for the optimal solution (see, for example, Patent Documents 1 to 4).

CITATION LIST

PATENT DOCUMENT

PATENT DOCUMENT 1: Japanese Patent Application Publication No. 2022-118555
PATENT DOCUMENT 2: Japanese Patent Application Publication No. 2022-117957
PATENT DOCUMENT 3: Japanese Patent Application Publication No. 2022-067101
PATENT DOCUMENT 4: Japanese Patent Application Publication No. 2022-031119

SUMMARY OF THE INVENTION

TECHNICAL PROBLEM

However, in reality, there are cases where work is not performed according to the exact solution, or where physical properties are not obtained according to the exact solution. In these cases, the effects that would be obtained with the exact solution may be significantly reduced.

In one aspect, the present invention aims to provide a calculation program, a calculation method, and an information processing device that can obtain highly robust solutions.

SOLUTION TO PROBLEM

In one aspect, a calculation program causes a computer to execute a process of, when converting an analysis target into an evaluation function and searching for a solution, generating a plurality of evaluation functions by reflecting variations in at least any element of the evaluation function, generating an objective function by combining the plurality of evaluation functions, and searching for a solution in the objective function.

ADVANTAGEOUS EFFECTS OF INVENTION]

Highly robust solutions can be obtained.

BRIEF DESCRIPTION OF THE DRAWINGS

[FIG. 1] Provided is a diagram illustrating optimization results for product placement in a packaging box.
[FIG. 2] Provided is a diagram explaining a QUBO format.
[FIG. 3] (a) is a functional block diagram of an overall configuration of an information processing device according to Embodiment 1, and (b) is a block diagram illustrating a hardware configuration of each part of the information processing device.
[FIG. 4] (a) is a diagram illustrating an example of an analysis target for magnet placement, and (b) is a diagram illustrating a target value.
[FIG. 5] Provided is a flowchart of an example of an operation of an information processing device.

[FIG. 6] Provided is a diagram illustrating synthesis of objective functions.
[FIG. 7] Provided is a diagram illustrating an example of an analysis target.
[FIG. 8] (a) is a result of a comparative example, (b) is a result of an embodiment, and (c) is magnetic flux density at each observation point relative to a target value B0.
[FIG. 9] (a) is a diagram of a relationship between a number of QUBOs generated and an average error, (b) is a diagram of a case where the number of QUBOs generated is 10 using a method of the embodiment, and (c) is a diagram of a case where the number of QUBOs generated is 50 using the method of the embodiment.

DESCRIPTION OF EMBODIMENTS

Prior to explaining the embodiments, an overview of optimization algorithms will be described.
Optimization problems exist in a variety of industries, including the distribution and manufacturing industries. Research is being conducted into optimization algorithms that seek exact solutions to these problems that achieve the highest computational effectiveness.
Here, the exact solution is a solution that maximizes the evaluation index. For example, in a production line, evaluation indexes include production completion time, delivery date, and production cost. In a packing operation, evaluation indexes include the amount of wasted materials and work time. An optimization algorithm uses one or more evaluation indexes as an objective function and performs optimization to improve the objective function. Note that in a production line, input variables include the initial product introduction order on the production line, as well as conditions such as the work time required for each product. In a packing operation, input variables include the initial packing order of products, as well as conditions such as the size, weight, and box size of each product. The resulting solution is the order in which products are introduced onto the production line. In the packing operation, the resulting solution is, for example, the order in which products should be packed.
Optimization algorithms can obtain the exact solution that maximizes the evaluation index. However, when attempting to actually apply the exact solution obtained by these optimization algorithms, various variations can occur, making it difficult to perform the operation according to the exact solution, or physical properties cannot be obtained according to the exact solution, resulting in a slight deviation from the exact solution.
Here, the exact solution obtained using conventional methods is often a solution that achieve high local effectiveness. Therefore, if the work content or physical properties deviate from the exact solution (for example, tolerances occur), the effectiveness may decrease dramatically, and the expected results may not be necessarily achieved.
For example, in the packing operation, differences in worker proficiency can increase the time required for the operation, or size errors in the products handled can prevent the packing operation from being performed according to the exact solution. These are all possible situations that can occur in real-world situations. If these issues occur, the work content will deviate from the exact solution.

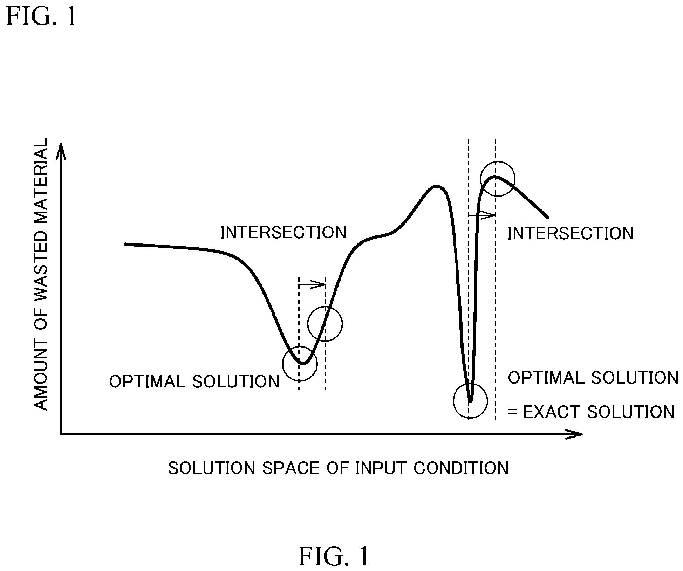

FIG. 1 is a diagram illustrating the optimization results for product placement in a packaging box. Packing products tightly into a packaging box can reduce the amount of wasted material. Therefore, it is possible to use an optimization algorithm to find the optimal solution for packing products into a packaging box. FIG. 1 is a diagram illustrating an optimal solution. In FIG. 1, the horizontal axis represents the solution space of the input conditions, and the vertical axis represents the amount of wasted material. In the example in FIG. 1, evaluation is performed using a single evaluation index: the amount of wasted material.
For example, the optimal solution on the right side of FIG. 1 is the exact solution because it minimizes the amount of wasted material. While this exact solution significantly reduces the amount of wasted material, because the solution exists locally, even a slight deviation from the exact solution can significantly increase the amount of wasted material. On the other hand, the optimal solution on the left side does not reduce the amount of wasted material as much as the exact solution, but compared to the exact solution, the solution does not exist locally (the difference in the amount of wasted material with neighboring solutions is small). Therefore, even if the work content deviates slightly from the optimal solution, the amount of wasted material does not increase significantly. In actual work sites, a highly robust optimization algorithm that can achieve results close to the optimal solution, even when the work content deviates from the optimal solution, is required.
Here, MORDO (multi-objective robust design optimization) is an example of a robust optimization method. This method repeatedly samples and varies the design variables being searched for during the optimization calculation, and then statistically processes and evaluates the resulting indices. Designs that lack robustness against variation result in large variations in the objective function obtained through repeated calculations. For example, by using the standard deviation of the objective function as an index of variation and minimizing this index, a design solution with high tolerance to variation can be obtained. However, a drawback of this method is the enormous amount of calculation required due to multiple sampling.
To overcome the problem of computation time, another highly robust optimization method is the robust genetic algorithm (GA). The robust GA method uses a genetic algorithm (GA) as the optimization engine, generating variations for each evaluation of the genetic algorithm's evolution to achieve generational evolution. Alternatively, a hybrid method combining the MORDO method and the robust GA method can be considered. However, these methods use a genetic algorithm (GA), which limits the problems to which they can be applied. In particular, GA is generally unsuitable for calculations involving a huge number of input variables from the perspective of convergence.

In the following embodiment, a description will be given of an embodiment that allows for formulation of QUBO (Quadratic Unconstrained Binary Optimization), which is treated as an optimization problem, while taking fluctuations into account.

[Embodiment 1]

First, the QUBO format will be given. The QUBO format stands for Quadratic Unconstrained Binary Optimization, and is a format that allows for binary optimization without quadratic constraints. The QUBO format can be expressed, for example, as in the following equation. Note that $x_i$ = 0 or 1 (i = 1, ..., N). $W_{ij}$ is the coupling coefficient between $x_i$ and $x_j$. $b_i$ is the bias coefficient for $x_i$. The first term on the right-hand side is a quadratic term, representing the interaction. The second term on the right-hand side is a linear term, representing the bias effect. The third term on the right-hand side is a constant term.

[Equation 1]

$$E(\boldsymbol{x}) = -\sum_{i,j} W_{ij} x_i x_j - \sum_i b_i x_i + \text{const.}$$

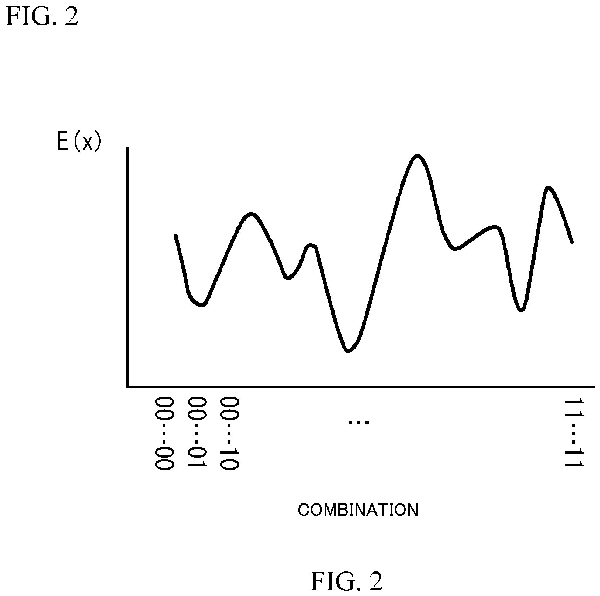

In the QUBO format, a solution is searched for according to the above equation. For example, if the optimal solution is one in which E(x) is smallest, a good solution x for minimizing E(x) is searched for, as illustrated in FIG. 2. For example, E(x) is calculated for the initial value of x, the value of x is changed and E(x) is calculated, and the value of x is further changed and E(x) is calculated, and this process is repeated. The x obtained when the smallest E(x) among the E(x) s obtained from each calculation is the solution.

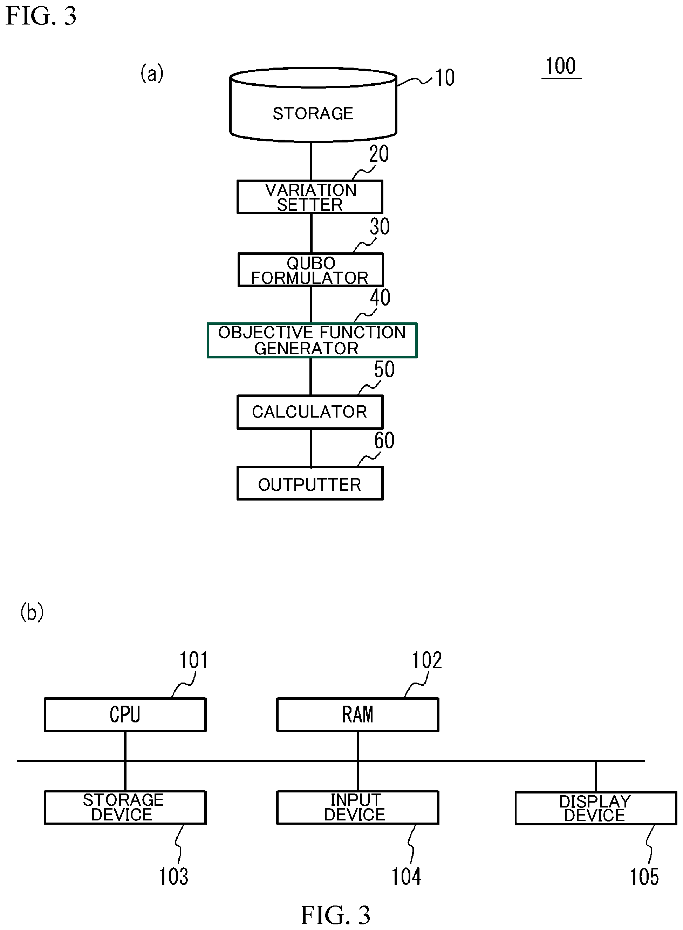

FIG. 3(a) is a functional block diagram of the overall configuration of an information processing device 100 according to Embodiment 1. The information processing device 100 is, for example, a server for optimization processing. As illustrated in FIG. 3(a), the information processing device 100 includes a storage 10, a variation setter 20, a QUBO formulator 30, an objective function generator 40, a calculator 50, and an outputter 60.

FIG. 3(b) is a block diagram illustrating the hardware configuration of each part of the information processing device 100. As illustrated in FIG. 3(b), the information processing device 100 includes a CPU 101, a RAM 102, a storage device 103, an input device 104, a display device 105, and so on.

The CPU (Central Processing Unit) 101 is a central processing unit. The CPU 101 includes one or more cores. The RAM (Random Access Memory) 102 is a volatile memory that temporarily stores programs executed by the CPU 101 and data processed by the CPU 101. The storage device 103 is a non-volatile storage device. For example, the storage device 103 can be a ROM (Read Only Memory), a solid-state drive (SSD) such as flash memory, or a hard disk driven by a hard disk drive. The storage device 103 stores a calculation program. The input device 104 is an input device such as a mouse or keyboard. Alternatively, the input device 104 is an interface such as an external memory such as a USB memory. The display device 105 is a device such as a display that displays the processing results of the information processing device 100. The CPU 101 executes the calculation program to realize each part of the information processing device 100. Note that each part of the information processing device 100 may also be implemented using hardware such as dedicated circuits.

In the embodiment 1, as an example, optimization of magnet placement will be described. In magnet placement, the optimal solution is sought when the desired magnetic flux density is achieved. Even if an exact solution is obtained for magnet placement, even a slight deviation from the exact solution due to variations in magnetization or the like, may result in the desired magnetic flux density not being achieved. Therefore, a highly robust optimization algorithm that can achieve an effect close to the optimal solution is required for magnet placement as well.

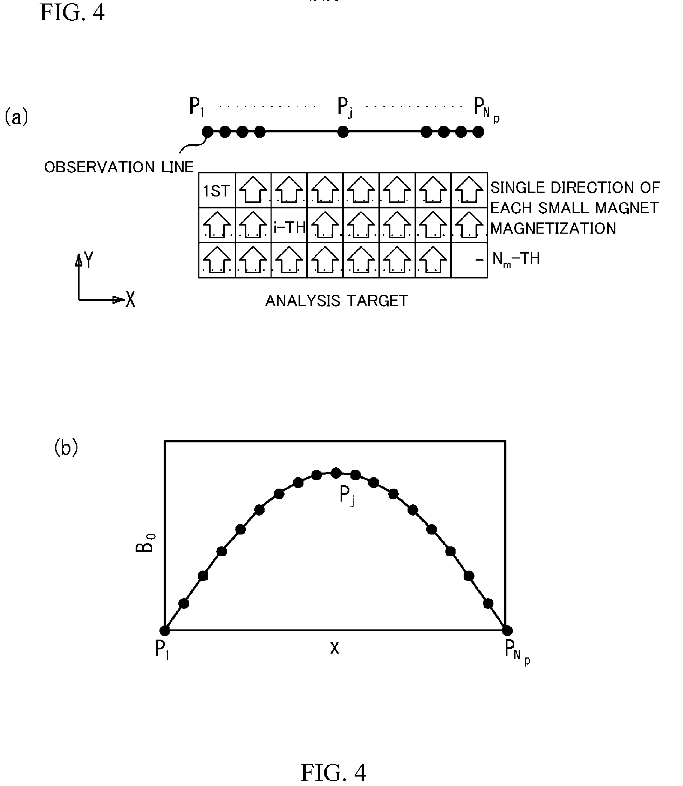

The storage 10 stores the magnet arrangement analysis target. FIG. 4(a) is a diagram illustrating an example of the magnet arrangement analysis target. As illustrated in FIG. 4(a), magnets can be arranged at predetermined intervals in the X-axis and Y-axis directions. Each small magnet is assumed to be magnetized in one direction. FIG. 4(b) is a diagram illustrating target values. In the example of FIG. 4(b), the magnetic flux density at each observation point is required to form a sinusoidal wave shape along the observation line.

As an example, for the magnet arrangement analysis target, the magnet arrangement is determined so that the target value illustrated in FIG. 4(b) is obtained. The magnetic flux density B generated by magnets at observation points P ($P_1$ to $P_{Np}$) can be expressed as B = μH + M. "μ" is the magnetic permeability of a vacuum. "H" is the magnetic field. According to this formula, the magnetic flux density B changes when there is a change in the magnitude of the magnetization M of each small magnet (Biot-Savart's law). In this magnet placement optimization problem, as an example, a magnet placement is sought that minimizes the error from the target value of the magnetic flux density at each observation point, even if fluctuations in magnetization M occur due to some factor.

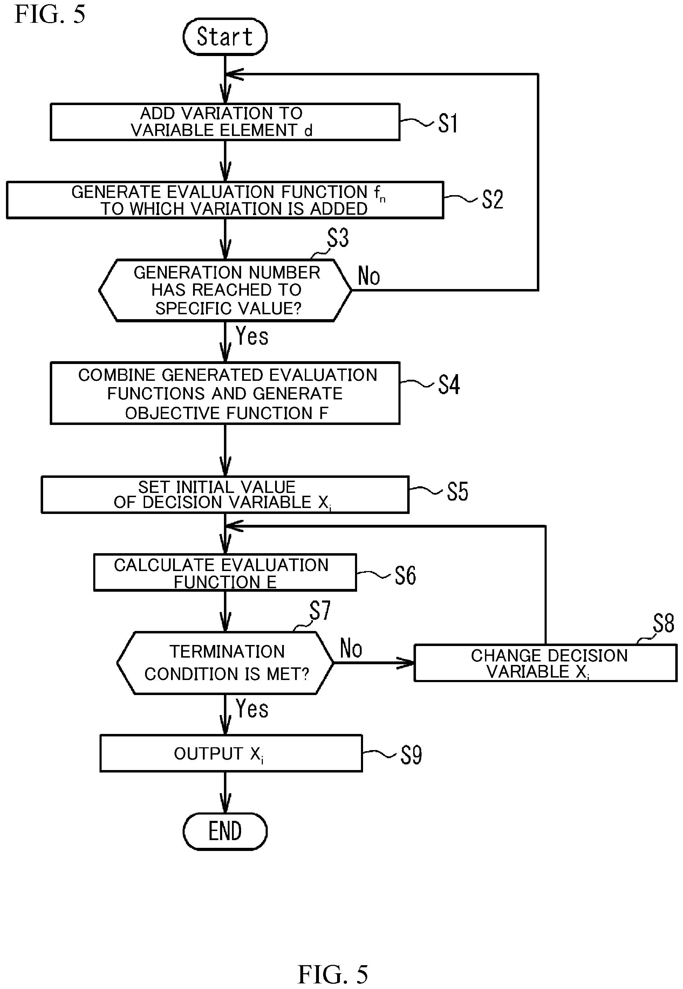

FIG. 5 is a flowchart illustrating an example of the operation of the information processing device 100. Below, an example of the operation of the information processing device 100 will be described in accordance with the flowchart in FIG. 5.

First, the variation setter 20 assigns a variation value to the variable element d (step S1). For example, the variation setter 20 sets a variation value according to a Gaussian distribution. A different variation value is set each time step S1 is executed.

Next, the QUBO formulator 30 generates an evaluation function $f_n$ to which the variation value has been assigned (step S2). When step S2 is executed the first time, an evaluation function $f_1$ is generated, when step S2 is executed the second time, an evaluation function $f_2$ is generated with a different variation value, and when step S2 is executed the third time, an evaluation function $f_3$ is generated with an even different variation value.

For example, if the above magnet placement analysis object is formulated in QUBO format, the following evaluation function f is obtained as an evaluation index. In the following equation, $B_y^{(i, j)}$ represents the magnetic flux density in the Y-axis direction at the observation point $P_j$ of the i-th magnet. $B_0^{(j)}(M)$ is the target value. $s_i$ = 0 means that no magnet is placed at the observation point $P_i$ of the i-th magnet. $s_i$ = 1 means that a magnet is placed at the observation point Pi of the i-th magnet. The smaller the difference between the searched $B_y^{(i, j)}$ and the target value $B_0^{(j)}(M)$, the better the solution. Therefore, a combination of 0 and 1 in $s_i$ (i = 1 to $N_p$) is searched for to minimize the following equation.

[Equation 2]

$$\mathcal{H} = \sum_{j=1}^{N_p} \left( B_y^{(j)}(M) - B_0^{(j)}(M) \right)^2$$
$$= \sum_{j=1}^{N_p} \left( \sum_{i=1}^{N_m} B_y^{(i,j)}(M) s_i - B_0^{(j)}(M) \right)^2 \rightarrow \text{min.}$$

[Equation 3]

$$s_i = \begin{cases} 0 \cdots \text{air} \\ 1 \cdots \text{magnet} \end{cases}$$

In this embodiment, the QUBO formulator 30 assigns the variation value set by the variation setter 20 to the above evaluation function f. In this embodiment, as an example, the magnetization M is used as the variable element d, and the variation value is reflected in the magnetization M. ΔM represents the variation value.

[Equation 4]

$$B = \mu\text{H} + (M + \Delta M)$$

[Equation 5]

$$\mathcal{H} = \sum_{j=1}^{N_p} \left( B_y^{(j)}(M + \Delta M) - B_0^{(j)}(M + \Delta M) \right)^2$$
$$= \sum_{j=1}^{N_p} \left( \sum_{i=1}^{N_m} B_y^{(i,j)}(M + \Delta M) s_i - B_0^{(j)}(M + \Delta M) \right)^2 \rightarrow \min.$$

Next, the QUBO formulator 30 determines whether the number of QUBO-format evaluation functions generated has reached a specified value (step S3). If step S3 returns "No," the process is repeated from step S1.

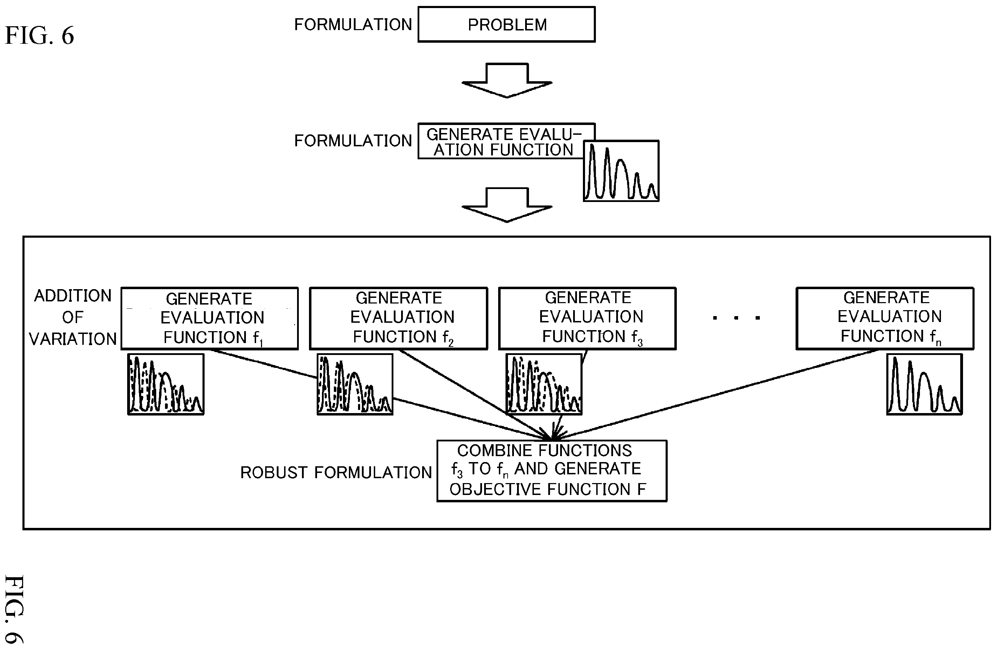

If step S3 returns "Yes," the objective function generator 40 combines the evaluation functions generated by the QUBO formulator 30 to generate a single objective function F (step S4). For example, as illustrated in FIG. 6, the objective function F is generated by combining evaluation functions $f_1$, $f_2$, $f_3$, ..., $f_n$, which are evaluation functions f created by the QUBO formulator 30 through QUBO formulation and which are given variation. The synthesis in this case is not particularly limited, but may be a simple arithmetic average or a weighted arithmetic average.

Next, the calculator 50 sets an initial value for the decision variable $x_i$ (step S5). In this embodiment, the decision variable $x_i$ is a combinations of 0 and 1 in the evaluation function $s_i$ (i = 1 to $N_p$).

Next, the calculator 50 calculates the objective function F using the decision variable $x_i$ as the evaluation function E(x) (step S6).

Next, the calculator 50 determines whether the termination condition is met (step S7). For example, it determines whether step S6 has been executed a specified number of times. Alternatively, it may determine whether a value below a threshold is obtained as the evaluation function E(x).

If the result of step S7 is "No," the calculator 50 changes the initial value of the decision variable $x_i$ (step S8). Then, the process is executed again from step S6.

If the result of step S7 is "Yes," the outputter 60 outputs the decision variables $x_i$ resulting in the lowest evaluation function E(x) as the optimal solution (step S9). The output decision variable $x_i$ is displayed on the display device 105 or the like.

In this embodiment, variations are introduced into the elements included in the evaluation function obtained by formulating the analysis target in a QUBO format to create each evaluation function, and a solution is searched for the objective function obtained by combining these evaluation functions. With this configuration, solutions with low robustness (steep peaks) have low evaluation values, while solutions with high robustness (gentler peaks) have relatively high evaluation values. Therefore, it becomes possible to identify highly robust solutions. Note that the search method for the decision variable $x_i$ is not limited to the above, and any optimization method can be applied. For example, a genetic algorithm or the like may be applied.

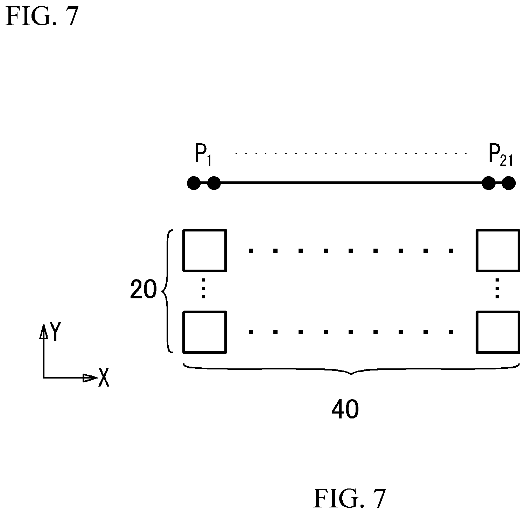

(Simulation Results) The magnet arrangement was optimized using a simulation based on the above example. As illustrated in FIG. 7, the magnet arrangement was 40 x 20 = 800 magnets. The size of each small magnet was 10 mm x 10 mm x 10 mm. The distance between the magnet and the observation line was 10 mm. The number of samples along the line was 21. The average value of each variation value set by the variation setter 20 was set to 0, and the standard deviation was set to 25% of the reference value. The reference value was set to magnetization M = 1.2 A/m. The number of evaluation functions $f_1$ to $f_n$ generated by the QUBO formulator 30 by reflecting each variation value in the evaluation function f was 50 (= n).

For comparison, in the comparative example, optimization was performed without introducing variation into the magnetization M. In other words, the evaluation function f was used as the objective function F.

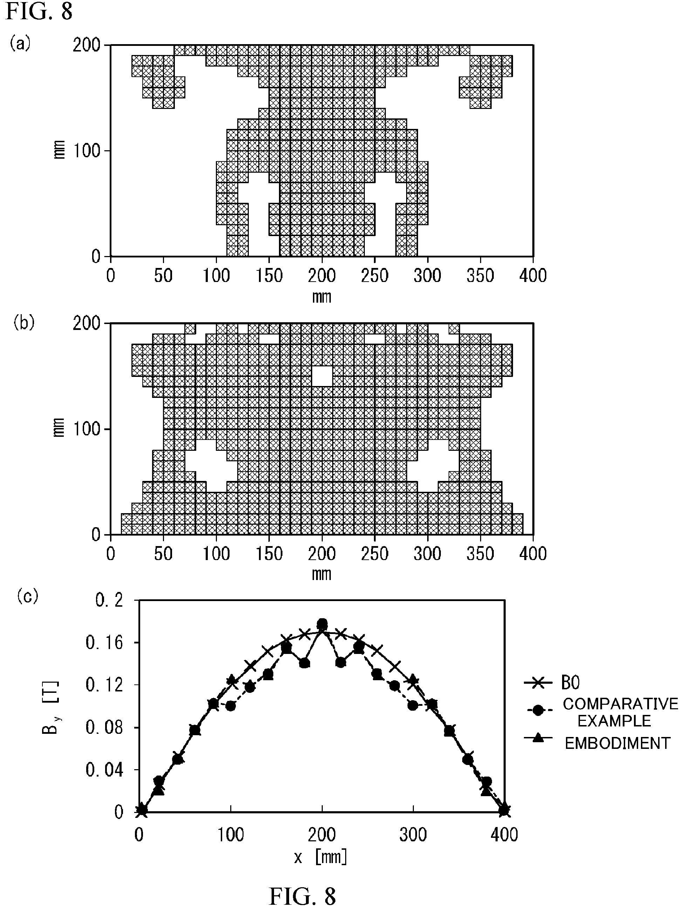

FIG. 8(a) illustrates the results of the comparative example. The gray areas indicate the locations of the magnets. FIG. 8(b) illustrates the results of the above embodiment. The gray areas indicate the locations of the magnets.

The method used in the above embodiment minimizes the impact of fluctuations, resulting in a large number of magnets being placed. In the comparative example, many magnets are placed in the upper part of the figure, which allows the magnetic flux density at the observation point to be as expected. However, if fluctuations in magnetization occur, fluctuations in the magnets in the upper part can easily change the magnetic flux density at the observation point. In contrast, the method used in the above embodiment reduces the impact of fluctuations by placing fewer magnets in the upper part, and by placing magnets overall, fluctuations in the magnetic flux density at the observation point can be suppressed.

FIG. 8(c) illustrates the magnetic flux density at each observation point relative to the target value $B_0$. In the

comparative example, fluctuations are observed in the magnetic flux at the 100 mm and 300 mm points. In contrast, it can be seen that these fluctuations are suppressed by the method of the above embodiment.

Next, robustness was evaluated. To evaluate robustness, the magnetization M was varied 50 times with different values, and the average error from the target value of the magnetic flux density at each observation point was calculated using the following equation:

[Equation 6]

$$\Delta B_y^{ave} = \frac{\sum_i^{N_p} \left| B_y^{(j)} - B_0^{(j)} \right|}{N_p}$$

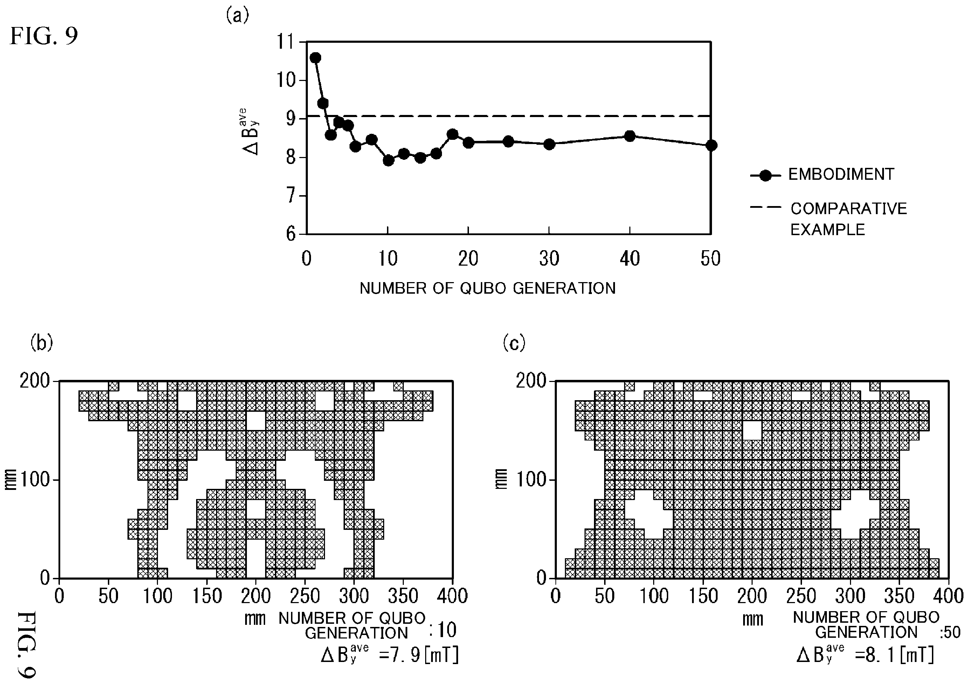

FIG. 9(a) illustrates the relationship between the number of QUBOs generated and the average error $\Delta B_y^{ave}$. Specifically, for one magnet arrangement obtained with each number of QUBOs generated, the magnetization was varied 50 times to calculate $\Delta B_y$, and the average $\Delta B_y^{ave}$ is plotted.

FIG. 9(b) illustrates the case where 10 QUBOs are generated using the method of the above embodiment. FIG. 9(c) illustrates the case where 50 QUBOs are generated using the method of the above embodiment. The results in FIG. 9(a) illustrates that this embodiment achieved a highly robust magnet arrangement with small magnetic flux density errors even when fluctuations in magnetization M occur.

Note that the results in FIG. 9(a) illustrates that if the number of evaluation functions generated is sufficiently large, the fluctuations will statistically become expected values, and there is a possibility that a solution that compensates for the effects of the fluctuations will not be found. This results in an increased number of magnets. Therefore, by reducing the number of evaluation functions generated and intentionally leaving the effects of fluctuations from the expected values, a highly robust solution can be obtained with a small number of magnets. From the above, it can be seen that adjusting the number of QUBO functions generated can control robust solution-finding performance.

In each of the above examples, the calculator 50 is an example of a searcher configured to, when converting an analysis target into an evaluation function and searching for a solution, generate a plurality of evaluation functions by reflecting variations in at least any element of the evaluation function, generate an objective function by combining the plurality of evaluation functions, and search for a solution in the objective function. The display device 105 is an example of a display device that displays the searched solution.

The above-described embodiment is a preferred example of the present invention. However, the present disclosure is not limited to this, and various modifications can be made without departing from the scope of the present invention.

Description of Symbols

10 Storage
20 Variation setter
30 QUBO formulator
40 Objective function generator
50 Calculator
60 Outputter
100 Information processing device
105 Display

## Claims

1. A calculation program **characterized by** causing a computer to execute a process including:
   when converting an analysis target into an evaluation function and searching for a solution, generating a plurality of evaluation functions by reflecting variations in at least any element of the evaluation function, generating an objective function by combining the plurality of evaluation functions, and searching for a solution in the objective function.

2. The calculation program as claimed in claim 1, **characterized in that** the variation follows a Gaussian distribution.

3. The calculation program as claimed in claim 1, **characterized in that** the objective function is generated by calculating an arithmetic mean of the plurality of evaluation functions.

4. The calculation program as claimed in claim 1, **characterized in that** the analysis target includes an array, and the solution to the objective function has order information in the array.

5. The calculation program as claimed in claim 1, **characterized in that** the evaluation function is expressed in QUBO format.

6. The calculation program as claimed in claim 1, **characterized in that** the computer executes a process of displaying the solution on a display device.

7. A calculation method **characterized in that** a computer executes a process including:
when converting an analysis target into an evaluation function and searching for a solution, generating a plurality of evaluation functions by reflecting variations in at least any element of the evaluation function, generating an objective function by combining the plurality of evaluation functions, and searching for a solution in the objective function.

8. The calculation method as claimed in claim 7, **characterized in that** the variation follows a Gaussian distribution.

9. The calculation method as claimed in claim 7, **characterized in that** the objective function is generated by calculating an arithmetic mean of the plurality of evaluation functions.

10. The calculation method as claimed in claim 7, **characterized in that** the analysis target includes an array, and the solution to the objective function has order information in the array.

11. The calculation method as claimed in claim 7, **characterized in that** the evaluation function is expressed in QUBO format.

12. The calculation method as claimed in claim 7, **characterized in that** the computer executes a process of displaying the solution on a display device.

13. An information processing device **characterized by** comprising:
a searcher configured to, when converting an analysis target into an evaluation function and searching for a solution, generate a plurality of evaluation functions by reflecting variations in at least any element of the evaluation function, generate an objective function by combining the plurality of evaluation functions, and search for a solution in the objective function.

14. The information processing device as claimed in claim 13, **characterized in that** the variation follows a Gaussian distribution.

15. The information processing device as claimed in claim 13, **characterized in that** the objective function is generated by calculating an arithmetic mean of the plurality of evaluation functions.

16. The information processing device claimed in claim 13, **characterized in that** the analysis target includes an array, and the solution to the objective function has order information in the array.

17. The information processing device as claimed in claim 13, **characterized in that** the evaluation function is expressed in QUBO format.

18. The information processing device as claimed in claim 13, **characterized by** comprising:
a display device configured to display the solution.

FIG. 1

AMOUNT OF WASTED MATERIAL
INTERSECTION
INTERSECTION
OPTIMAL SOLUTION
OPTIMAL SOLUTION
= EXACT SOLUTION
SOLUTION SPACE OF INPUT CONDITION

FIG. 1

FIG. 2

E(x)
00…00
00…01
00…10
…
11…11
COMBINATION

FIG. 2

FIG. 3

(a)
100
STORAGE
10
VARIATION SETTER
20
QUBO FORMULATOR
30
OBJECTIVE FUNCTION GENERATOR
40
CALCULATOR
50
OUTPUTTER
60

(b)
CPU
101
RAM
102
STORAGE DEVICE
103
INPUT DEVICE
104
DISPLAY DEVICE
105

FIG. 3

FIG. 4

(a)
P1 ............ Pj ............ PNp
OBSERVATION LINE
1ST
i-TH
SINGLE DIRECTION OF EACH SMALL MAGNET MAGNETIZATION
Nm-TH
Y
X
ANALYSIS TARGET

(b)
B0
Pj
P1
x
PNp

FIG. 4

FIG. 5

Start
ADD VARIATION TO VARIABLE ELEMENT d
S1
GENERATE EVALUATION FUNCTION $f_n$ TO WHICH VARIATION IS ADDED
S2
S3
GENERATION NUMBER HAS REACHED TO SPECIFIC VALUE?
No
Yes
COMBINE GENERATED EVALUATION FUNCTIONS AND GENERATE OBJECTIVE FUNCTION F
S4
SET INITIAL VALUE OF DECISION VARIABLE $X_i$
S5
CALCULATE EVALUATION FUNCTION E
S6
S7
TERMINATION CONDITION IS MET?
No
CHANGE DECISION VARIABLE $X_i$
S8
Yes
OUTPUT $X_i$
S9
END

FIG. 5

FIG. 6
FORMULATION
PROBLEM
FORMULATION
GENERATE EVALU-
ATION FUNCTION
ADDITION
OF
VARIATION
GENERATE
EVALUATION
FUNCTION $f_1$
GENERATE
EVALUATION
FUNCTION $f_2$
GENERATE
EVALUATION
FUNCTION $f_3$
GENERATE
EVALUATION
FUNCTION $f_n$
ROBUST FORMULATION
COMBINE FUNCTIONS
$f_3$ TO $f_n$ AND GENERATE
OBJECTIVE FUNCTION F

FIG. 6

FIG. 7

P1
P21
20
Y
X
40

FIG. 7

FIG. 8

(a)
200
100
0
mm
0
50
100
150
200
250
300
350
400
mm

(b)
200
100
0
mm
0
50
100
150
200
250
300
350
400
mm

(c)
0.2
0.16
0.12
0.08
0.04
0
B y [T]
0
100
200
300
400
x [mm]
B0
COMPARATIVE EXAMPLE
EMBODIMENT

FIG. 8

FIG. 9

(a)
ΔB_y^ave
11
10
9
8
7
6
0
10
20
30
40
50
NUMBER OF QUBO GENERATION
EMBODIMENT
COMPARATIVE EXAMPLE
(b)
mm
200
100
0
50
100
150
200
250
300
350
400
mm
NUMBER OF QUBO GENERATION :10
ΔB_y^ave =7.9 [mT]
(c)
mm
200
100
0
50
100
150
200
250
300
350
400
mm
NUMBER OF QUBO GENERATION :50
ΔB_y^ave =8.1 [mT]


FIG. 9

## INTERNATIONAL SEARCH REPORT

International application No.
**PCT/JP2023/032332**

**A. CLASSIFICATION OF SUBJECT MATTER**

***G06N 99/00***(2019.01)i; ***G06Q 10/04***(2023.01)i
FI: G06N99/00 180; G06Q10/04

According to International Patent Classification (IPC) or to both national classification and IPC

**B. FIELDS SEARCHED**

Minimum documentation searched (classification system followed by classification symbols)

G06N3/00-99/00; G06Q10/04-10/067; G06F17/10-17/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | 田辺 隆也 ほか, 電源の固定費・可変費の不確実さを考慮した電源ロバストミックス決定手法, 電気学会論文誌Ｂ, 1992, vol. 112, no. 4, pp. 331-338, ISSN: 0385-4213 (TANABE, Ryuya et al., Determination of Robust Generation Mix Considering Uncertainties, IEICE Trans. Commun.) chapters 1, 3-4 | 1, 3-7, 9-13, 15-18 |
| A | | 2, 8, 14 |
| A | WO 2017/135314 A1 (NEC CORPORATION) 10 August 2017 (2017-08-10) abstract, paragraphs [0029]-[0188] | 1-18 |
| A | 丸尾 昭人 ほか, デジタルアニーラを用いた電気機器のトポロジー最適化, 令和３年電気学会全国大会講演論文集 ［ＤＶＤ－ＲＯＭ］, 2021, presentation no. 5-120, pp. 205-206 (MARUO, Akito et al., Topology Optimization of Electric Devices Using Digital Annealer, 2021 Annual Meeting Record, I.E.E. Japan) entire text, all drawings | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/032332**

| Patent document cited in search report | Publication date (day/month/year) | Patent family member(s) | Publication date (day/month/year) |
|---|---|---|---|
| WO 2017/135314 A1 | 10 August 2017 | US 2019/0018823 A1 abstract, paragraphs [0029]-[0191] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022118555 A
- JP 2022117957 A
- JP 2022067101 A
- JP 2022031119 A